# EUROPÄISCHE PATENTSCHRIFT

(11) **EP 1 966 247 B1**
(45) Veröffentlichungstag und Bekanntmachung des Hinweises auf die Patenterteilung: **11.03.2009**
(21) Anmeldenummer: 06829484.2
(22) Anmeldetag: 11.12.2006
(51) Int. Cl.: C08C 19/02, C08L 9/00, C08F 136/06

(54) **HOCHGEFÜLLTE KAUTSCHUKMISCHUNGEN UND VULKANISATE AUF BASIS VON HYDRIERTEN VINYLPOLYBUTADIENEN**
HIGHLY FILLED RUBBER MIXTURES AND VULCANIZATES BASED ON HYDROGENATED VINYLPOLYBUTADIENES
MELANGES DE CAOUTCHOUC HAUTEMENT CHARGES ET VULCANISAT A BASE DE VINYLPOLYBUTADIENE HYDROGENE

(30) Priorität: 22.12.2005 DE 102005061473
(43) Veröffentlichungstag der Anmeldung: 10.09.2008
(73) Patentinhaber: Lanxess Deutschland GmbH & Co.KG, 51369 Leverkusen (DE)
(72) Erfinder: OBRECHT, Werner, 47447 Moers (DE); BISCHOFF, Andreas, 41541 Dormagen (DE)
(86) Internationale Anmeldenummer: PCT/EP2006/011892
(87) Internationale Veröffentlichungsnummer: WO 2007/079872

(56) Entgegenhaltungen:
- GB-A- 1 354 465
- US-A- 4 310 582
- US-A- 5 620 939
- US-A1- 2004 242 797
- US-B1- 6 378 582

## Beschreibung

Gegenstand der vorliegenden Anmeldung sind hochgefüllte Kautschukmischungen auf Basis von hydrierten Vinylpolybutadienen, deren Vulkanisate sowie deren Verwendung zur Herstellung von Kautschukformkörpem mit sehr guten mechanischen Eigenschaften.

Für die Herstellung verschiedener vulkanisierter Formkörper, wie für die Herstellung von Profilen, Dichtringen, Schläuchen und anderen Formteilen, ist es erforderlich, dass hochgefüllte Kautschukmischungen gut verarbeitet werden können. Dies wird üblicherweise dadurch erreicht, dass dem Kautschuk, beispielsweise einem handelsüblichen EPDM-Kautschuk (EPDM-Kautschuke sind Polymere auf Basis von Ethylen/Propylen-Polymerisaten) große Mengen an Ruß oder an anderen anorganischen Füllstoffen zugesetzt wird. Durch die Verwendung der Füllstoffe wird die Mischungsviskosität (Mischungsviskosität: MLI+4/100°C nach ASTM D 1646) der unvulkanisierten Mischung erhöht. Dadurch verschlechtert sich deren Verarbeitbarkeit bei Anwendung der üblichen Verarbeitungsverfahren, wie Injection Moulding, Transfer Moulding, Kalandrierung oder Extrusion. Zur Reduktion der Mischungsviskosität sowie zur Verbesserung der Verarbeitbarkeit solcher hochgefüllten Kautschukmischungen setzt man üblicherweise Öle hinzu. Durch den Ölzusatz werden aber insbesondere die mechanischen Eigenschaften der Vulkanisate (charakterisiert durch das Produkt aus Zugfestigkeit x Bruchdehnung) verschlechtert. Auch durch den Einsatz niedermolekularer Kautschuke löst man diesen Zielkonflikt nicht. Durch die Verwendung niedermolekularer Kautschuke werden zwar die Viskositäten hochgefüllter Kautschukmischungen reduziert, gleichzeitig aber die Vulkanisateigenschaften verschlechtert

Aufgabe der vorliegenden Erfindung ist es daher, hochgefüllte Kautschukmischungen bereitzustellen, die einerseits niedrige Mischungsviskositäten im unvulkanisierten Zustand aufweisen und andererseits nach der Vulkanisation ein hohes Niveau der mechanischen Eigenschaften besitzen.

Es wurde jetzt gefunden, dass bei Verwendung von hydriertem Vinylpolybutadien hochgefüllte Kautschukmischungen erhalten werden, die im unvulkanisiertem Zustand sowohl niedrige Mischungsviskositäten als auch nach der Vulkanisation ein hohes Niveau bezüglich der mechanischen Eigenschaften aufweisen.

Darüber hinaus besitzen die hochgefüllten erfindungsgemäßen Kautschukvulkanisate ein Werteniveau bezüglich üblicher Standard-Vulkanisationseigenschaften, das mit den Vulkanisateigenschaften von Kautschukmischungen vergleichbar ist, die für solche Zwecke im allgemeinen eingesetzt werden. Als Standard-Eigenschaften zählen z.B. Shore-A-Härten bei 23 und 70°C (DIN 53505); Rückprallelastizitäten bei 23 und 70°C (DIN 53512).

Ferner genügt das Alterungsverhalten der erfindungsgemäßen Vulkanisate den üblichen Mindestanforderungen und ist mit dem Alterungsverhalten von entsprechenden EPDM-Kautschukvulkanisaten gut vergleichbar.

Gegenstand der vorliegenden Anmeldung sind daher hochgefüllte Kautschukmischungen auf Basis hydrierter Vinylpolybutadiene mit Vinylgehalten von etwa 45 bis 55 mop-%, Hydriergraden von ca. 80 bis 100 % und Mooney-Viskositäten (ML1+4/100°C) von etwa 60 bis 150 ME, die dadurch gekennzeichnet, sind, dass die Kautschukmischungen Füllstoffe in Mengen von 151 bis 350 phr enthalten.

Besonders bevorzugt sind hochgefüllten Kautschukmischungen, die die Füllstoffe in Mengen von 180 bis 330, ganz besonders bevorzugt in Mengen von 200 bis 300 phr enthalten.

Als Füllstoffe können in den erfindungsgemäßen Kautschukmischungen die für Kautschukmischungen dem Fachmann bekannten Füllstoffe eingesetzt werden. Dies sind z.B. die verschiedensten Arten von Rußen, Kieselsäuren, Calciumcarbonat, Magnesiumcarbonat, Bleisulfat, Zinkoxid, Magnesiumoxid, Kalziumoxid, Aluminiumoxid, Eisenoxid, Diatomenerde, Korkmehl und Silikate. Die Auswahl der Füllstoffe richtet sich nach dem einzustellenden Eigenschaftsprofil der Vulkanisate und deren Anwendungsbereiche. Sollten die Vulkanisate beispielsweise flammfest ausgerüstet werden, empfiehlt sich der Einsatz von entsprechenden Hydroxiden, wie Aluminiumhydroxid, Magnesiumhydroxid oder Calciumhydroxid, sowie von wasserhaltigen Salzen, insbesondere von Salzen, die Wasser als Kristallwasser enthalten.

Die erfindungsgemäß einzusetzenden Füllstoffe können sowohl einzeln als auch in beliebigem Gemisch untereinander eingesetzt werden.

Die hydrierten Vinylpolybutadiene, die als Basis-Kautschuke in den erfindungsgemäßen hochgefüllten Kautschukmischungen eingesetzt werden, können durch anionische Polymerisation von Butadien in Gegenwart sogenannter Randomizer wie Tetramethylendiamin, Dimethyloxyethan, Butylethoxyethan und/oder Tetraliydrofuran hergestellt werden. Durch Art und Menge des Rando- _ mizers, insbesondere durch das molare Verhältnis von Lithium (anionischer Initiator)/Randomizer, durch die Polarität des Lösungsmittels und durch die Einstellung der Polymerisationstemperatur gelingt die gezielte Einstellung des Vinylgehaltes der Vinylpolybutadiene. Die Herstellung der Vinylpolybutadiene wird beispielsweise beschrieben durch H.L. Hsieh und R. Quirk "Anionic Polymerisation, Principles and Practical Applications" Marcel Dekker Inc. New York, Basel, 1966, Seiten 197-235. Die Hydrierung von Vinylpolybutadien ist ebenfalls bekannt und kann sowohl mit Hilfe heterogener als auch homogener Katalysatoren durchgeführt werden. Die Katalysatoren sind beispielsweise beschrieben in US 3113986, US 3333024, US 3700633, US 4107236, US 498033, US 3595942, 4028485, 3135716, 3150209, 3496154, 3498960, 4145298, 4238202, 3265765, 3322856; 5030779, 3541064, 3644588, FR 1581146, 2393608 und in WO 9314130. In bevorzugter Weise wird die-Hydrierung mit einem Nickel- oder Kobalt-Salz in Kombination mit einem Aluminium-Alkyl wie in DE 1032 4304 A1 beschrieben, durchgeführt.

Dort werden auch voll- und teilhydrierte Vinylpolybutadiene sowie die Basiseigenschaften entsprechender unvernetzter Produkte beschrieben. Es werden hydrierte Vinylpolybutadiene in das erfindungsgemäße Verfahren eingesetzt, die die zuvor erwähnten Basiseigenschaften besitzen, wobei darauf hinzuweisen ist, dass die angegebenen Vinylgehalte sich auf den Feedstock beziehen und bestimmt werden durch ¹H-NMR Spektroskopie. Die eingesetzten voll- und teilhydrierten Vinylpolybutadiene besitzen darüber hinaus Glasübergangstemperaturen von < 57°C und Schmelzenthalpien von < 30 J/g.

Außer den genannten Füllstoffen können den erfindungsgemäßen hochgefüllten Kautschukmischungen zur Erzielung bestimmter Produkt- und/oder Vulkanisationseigenschanen sogenannte Füllstoffaktivatoren zugesetzt werden. Die Zugabe der Füllstoffaktivatoren kann während der Mischungsherstellung durchgeführt werden. Es kann aber auch eine Behandlung des Füllstoffes mit den Füllstoffaktivatoren erfolgen, bevor der Füllstoff der Kautschukmischung zugesetzt wird. Als Aktivatoren dienen z.B. Silane, wie

Bis(triethoxysilylpropyl)polysulfan (nur für Schwefelvernetzung), Vinyltrimethoxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyltrimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan sowie (Octadecyl)methyldimethoxysilan. Weitere Füllstoffaktivatoren stellen zum Beispiel grenzflächenaktive Substanzen wie Triethanolamin und Ethylenglycole mit Molekulargewichten von 74 bis 10000 g/mol dar. Die Menge der einzusetzenden Füllstoffaktivatoren beträgt etwa 0,1 % bis 12 %, bevorzugt 0,3 % bis 10 %, bezogen auf die Menge des Füllstoffanteils. Darüber hinaus können den erfindungsgemäßen Kautschukmischungen die üblichen Mineralöle zugesetzt werden, die paraffinische, naphthenische sowie aromatische Anteile enthalten können. Ein Überblick über die Mineralöle, die als Weichmacher geeignet sind, wird beispielsweise in W. Sommer, W. Wicke und D. Mayer in Ullmann's Encyklopädie der technischen Chemie, 4. Aufl. Band 24, S. 349-380 (1977) beschrieben.

Die Mineralöle, die als Weichmacher eingesetzt werden, werden im allgemeinen in Mengen von 0,1 bis zu 150 phr, bevorzugt 1 bis 120 phr, bezogen auf die Gesamtmenge an Kautschuk zugesetzt.

Über das Verhältnis von Füllstoffen zu Mineralölen kann die Verarbeitbarkeit der unvulkanisierten Kautschukmischungen in gewissen Grenzen gesteuert werden. So können durch entsprechende Dosierverhältnisse von Öl und Füllstoff Mooneyviskositäten von ca. 30 ME bis 120 ME (ML 1+4 min/100°C) eingestellt werden.

Die erfindungsgemäßen hochgefüllten Kautschukmischungen können in üblicher Weise vulkanisiert werden, beispielsweise durch Vulkanisation in Gegenwart von Schwefel oder Schwefelspendern bzw. Beschleunigern oder deren Gemischen (Schwefelvulkanisation) oder durch Vulkanisation in Gegenwart von Peroxyden oder deren Gemischen oder in Gegenwart von Azoverbindungen.

Gegenstand der vorliegenden Anmeldung sind daher auch hochgefüllte Kautschukvulkanisate auf Basis hydrierter Vinylpolybutadiene mit den zuvor angegebenen Vinylgehalten, Hydriergraden und Mooneyviskositäten und den angegebenen Mengen an Füllstoffen.

Die Vulkanisation von Kautschukmischungen auf Basis hydrierter Vinylpolybutadiene ist beispielsweise beschrieben in der deutschen Patentanmeldung DE 10 2005 054 091.0 (Schwefelvulkanisation) und in der deutschen Patentanmeldung DE 10 2005 044 453.9 (Vulkanisation in Gegenwart von Peroxyden und Azoverbindungen).

Dort sind auch die erwähnten bekannten Vernetzungsmittel und die bekannten Beschleuniger näher beschrieben sowie die üblichen Vulkanisationshilfsmittel ebenso wie die in üblicher Weise eingesetzten Mengen der bei der Vulkanisation eingesetzten Chemikalien.

Wichtige Vernetzungsmittel sind z.B. neben Schwefel auch Schwefelspender wie Tetramethylthiuramdisufid, Caprolactamdisulfid und Dipentamethylenthiuramdisulfid.

Weiterhin können bei der Vulkanisation noch die bekannten Alterungsschutzmittel und Formtrennmittel in den üblichen Mengen eingesetzt werden. Darüber hinaus können den Vulkanisaten bestimmte Festigkeitsträger zugegeben werden, wie Glasfasern, Fasern aus aliphatischen und aromatischen Polyamiden, z.b. Polyamid^{®}, Polyesterfasern, Polyvinylalkoholfasern, Cellulosefasern, Naturfasern, wie Baumwolle oder Holzfasern, sowie Gewebe aus Baumwolle, Polyester, Polyamid, Glas- und Stahlcord.

Grundsätzlich ist es möglich, alle bekannten Zusatz- und Hilfsstoffe den Vulkanisaten zuzugeben, um das Eigenschaftsprofil der Vulkanisate entsprechend den Anforderungen bei deren Verwendung zu gewährleisten.

Die Herstellung der erfindungsgemäßen Mischungen mit den üblichen Zusätzen erfolgt vor der Vulkanisation in den hierfür bekannten Aggregaten, wie Innenmischer, Extrudern und Walzen. Die Zugabe der einzelnen Mischungsbestandteile erfolgt vorzugsweise in einer frühen Phase des Mischungsprozesses, um den Mastifikationseffekt zu maximieren. Die Temperatur beim Mischen soll dann zum Ende des Mischungsprozesses möglichst hoch sein (Ausstoßtemperatur ca. 150 bis 160°C), da die Mastikation auch durch thermische Einflüsse begünstigt wird.

Die Verarbeitung der vulkanisierten Mischungen erfolgt in bekannter Weise, wie durch Kalandrieren, Transfer-Moulding, Extrudieren oder durch Spritzgießen. Die Temperatur bei der Verarbeitung ist so zu wählen, dass keine vorzeitige Vulkanisation stattfindet. Hierzu können entsprechende Vorversuche durchgeführt werden.

Die optimale Temperatur zur Durchführung der Vulkanisation ist naturgemäß der Reaktivität des eingesetzten Vernetzungssystems abhängig und kann im vorliegenden Fall bei Temperaturen von Raumtemperatur (ca. 20°C) bis ca. 220°C erfolgen, ggf. unter erhöhtem Druck. Die Vemetzungszeiten betragen im allgemeinen etwa 20 Sekunden bis 60 Minuten, bevorzugt etwa 30 Sekunden bis 30 Minute.

Die Vulkanisationsreaktion selbst kann in üblicher Weise durchgeführt werden, in Vulkanisationspressen, Autoklaven, in Gegenwart von Heißluft, Mikrowellen und anderer energiereicher Strahlung (z. B. UV- oder IR-Strahlung) sowie im Salzbad.

Werden die Mischungen drucklos vulkanisiert, so ist es empfehlenswert, während der Mischungsherstellung oder während der weiteren Verarbeitung den Mischungen ein Trocknungsmittel zuzugeben. Hierzu kann beispielsweise Calciumoxid in reiner oder gebundener Form eingesetzt werden. Der Zusatz von Calciumoxid kann in Mengen von ca. 0,1 bis 20 phr, bevorzugt 0,5 bis 15 phr, erfolgen.

Zur Erzielung bestimmter Produkteigenschaften oder um die Vulkanisation zu vervollständigen, kann eine Nachtemperung erforderlich sein. In diesen Fällen wird eine Nachtemperung bei Temperaturen im Bereich von ca. 60 °C bis ca. 220°C in einem Zeitraum von ca. 2 Minuten bis 24 h gegebenenfalls unter reduziertem Druck durchgeführt.

Ein weiterer Gegenstand der vorliegenden Patentanmeldung ist die Verwendung der hochgefüllten Vulkanisate zur Herstellung von technischen Gummiartikeln, insbesondere zur Herstellung von Profilen, Schläuchen, Kabelummantelungen, Kupplungen, Dichtungen und Manschetten, Beschichtungen, Platten und Bälgen sowie von Verbundkörpern aus Gummi/Metallen, Gummi/Kunststoffen und Gummi/Textilien.

### Beispiel

### Beispiel 1

### Für Untersuchungen eingesetzte Hydrierte Vinylpolybutadien-Produkte (HVIBR) sowie EPDM-Vergleichsprodukte

Die Ausgangsprodukte für die hydrierten Vinylpolybutadiene (Vinylpolybutadien-Feedstocks), die für die weiteren Untersuchungen eingesetzt wurden, wurden nach der Lehre von DE 10324304 A1 hergestellt. Die Basiseigenschaften der hydrierten Vinylpolybutadien-Produkte, die bei den weiteren Versuchen eingesetzt wurden, sind in nachfolgender Tabelle 1.1. zusammengefasst:

**Tabelle 1.1: Basiseigenschaften der hydrierten HVIBR-Typen**

| Kautschuk | ML1+4 / 125°C [MU] | Vinylgehalt (im Feedstock) [%] | Hydriergrad [%] | ΔH [J/g] | Tg [°C] | Ethylengehalt [%] | ENB-Gehalt [%] |
|---|---|---|---|---|---|---|---|
| HVIBR 96 | 90 | 49,3 | 96,2 | 0 | -61 | - | - |
| HVIBR 94 | 136 | 47,5 | 94,1 | 2,7 | -60 | - | - |
| HVIBR85 | 78 | 50 | 85 | 0 | -62 | - | - |

Die Compound- und Vulkanisateigenschaften der hydriertem Vinylpolybutadien werden mit denen etablierter EPDM-Kautschuke verglichen. Die EPDM-Typen Buna^{®} EP G 5450, Buna^{®} EP G 6850, Buna^{®} EP G 9650 und Buna^{®} EP G 3440 sind Handelsprodukte der Lanxess Deutschland GmbH.

Wichtige Basisdaten dieser EPDM-Typen sind in beiliegender Tabelle 1.2. zusammengefasst.

**Tabelle 1.2: Basiseigenschaften der EPDM-Vergleichsprodukte.**

| Kautschuk | ML1+4 / 125°C [MU] | Vinylgehalt [%] | Hydriergradv [%] | ΔH [J/g] | Tg [°C] | Ethylengehalt [%] | ENB-Gehalt [%] |
|---|---|---|---|---|---|---|---|
| Buna® EPG 5450 | 46 | - | - | 0,56 | -53,3 | 52 | 4,3 |
| Buna® EPG 6850 | 60 | - | - | 0,69 | -49,2 | 51 | 7,7 |
| Buna® EPT 9650 | 90 | - | - | 3,56 | -50,9 | 53 | 6,5 |
| Buna® EPG 3440 | 28 | - | - | 0 | -52,2 | 48 | 4,1 |

### Beispiel 2

### Herstellung, Vulkanisation und Charakterisierung der Kautschukmischungen

### Herstellung der Kautschukmischungen

Für die Herstellung der Kautschukmischungen wurde ein Innenmischer mit 1.51 Inhalt und mit "intermeshing rotor geometry" (GK1.5E von Werner & Pfleiderer) verwendet. Zuerst wurde jeweils der Kautschuk (HVIBR oder EPDM) in den Mischer gegeben. Nach 30 s wurden ale weiteren Komponenten außer Perkadox® BC-40 B-PD und Rhenofit EDMA/S zugegeben und bei konstanter Rotordrehzahl bei 40 U/min gemischt. Nach einer Mischzeit von 4 min wurde die Mischung ausgeworfen und abkühlen lassen. Anschließend wurden Perkadox^{®} BC-40 B-PD und Rhenofit^{®} EDMA/S auf der Walze bei 40°C eingemischt.

### 2.1: Zusammensetzung der Kautschukmischungen

| **Kautschukmischung-Nr.:** | | **2.1.1** | **2.1.2** | **2.13** | **2.1.4** | **2.1.5** | **2.1.6** | **2.1.7** |
|---|---|---|---|---|---|---|---|---|
| HVIBR 96 | [phr] | 100 | | | | | | |
| HVIBR 95 | [phr] | | 100 | | | | | |
| HVIBR 85 | [phr] | | | 100 | | | | |
| Buna EP G 5450 | [phr] | | | | 100 | | | |
| Buna EP G 6850 | [phr] | | | | | 100 | | |
| Buna EP T 9650 | [phr] | | | | | | 100 | |
| Buna EP G 3440 | [phr] | | | | | | | 100 |
| Corax^{®} N 550 ¹⁾ | [phr] | 140 | 140 | 140 | 140 | 140 | 140 | 140 |
| Mikrosöhl-Kreide²⁾ | [phr] | 90 | 90 | 90 | 90 | 90 | 90 | 90 |
| Sunparg^{®} 2280³⁾ | [phr] | 90 | 90 | 90 | 90 | 90 | 90 | 90 |
| Edenor^{®}C 18 98-100⁴⁾ | [phr] | 1 | 1 | 1 | 1 | 1 | 1 | 1 |
| Polyglykol 4000 S^{®5)} | [phr] | 2 | 2 | 2 | 2 | 2 | 2 | 2 |
| Rhenogran^{®} CaO 80⁶⁾ | [phr] | 8 | 8 | 8 | 8 | 8 | 8 | 8 |
| Perkadox^{®} BC-40 B-PD⁷⁾ | [phr] | 7,5 | 7,5 | 7,5 | 7,5 | 7,5 | 7,5 | 7,5 |
| Rhenofit^{®} EDMA/S⁸⁾ | [phr] | 2 | 2 | 2 | 2 | 2 | 2 | 2 |

| | | | | | | | | |
|---|---|---|---|---|---|---|---|---|
| 1) Spezifizierter Ruß der Fa. Degussa AG 2) Calciumcarbonat der Fa. Vereinigte Kreidewerke Dammann 3) Mineralölweichmacher der Fa. Sunoco Rubber & Chemical 4) Stearinsäure der Fa; Cognis Deutschland GmbH 5) Polyethylenglykol der Fa. Clariant 6) Calciumoxid, Wirkstoffgehalt 80% auf Polymerbinder (EPDM/ EVA) der Fa. RheinChemie Rheinau GmbH 7) Dicumylperoxid, 40%, mit inerten Füllstoffen der Fa. Akzo Nobel 8) Ethylenglycoldimethacrylat, gebunden mit Kieselsäure, der Fa. RheinChemie Rheinau GmbH | | | | | | | | |

An den unvulkanisierten Kautschukmischungen wurden folgende Werte bestimmt:

### 2.2: Eigenschaften der Kautschukmischungen

| **Kautschukmischung-Nr.:** | | **2.2.1** | **2.2.2** | **2.2.3** | **2.2.4** | **2.2.5** | **2.2.6** | **2.2.7** |
|---|---|---|---|---|---|---|---|---|
| Mooneyviskosität (ML1+4/100°C) nach ASTM D 1646 | [ME] | 75 | 66 | 63 | 53 | 71 | 87 | 39 |
| Veränderung der Mooneyviskosität (ML1+4/100°C) nach ASTM D 1646 im Vergleich zum Rohpolymer (Tab. 1.1 und Tab 1.2.) | [ME] | -15 | 70 | -15 | +7 | +11 | -3 | +11 |
| Delta ME = (Mooney Kautschukmischung (ML 1+4/100°C)) - (Mooney Polymer(ML 1+4/125°C)) | | | | | | | | |

Bei den erfindungsgemäßen Beispielen der hydrierten Vinylpolybutadiene kommt es in allen Fällen zu einem signifikanten Abfall der Mooneyviskositäten der Kautschukmischungen im Vergleich zu denen der Rohpolymere. Der Abfall ist in allen Fällen deutlich höher, als im Fall der Vergleichsbeispiele, was auf einen höheren Mastikationseffekt (Polymerabbau) bei der Mischungsherstellung schließen lässt und woraus eine bessere Verarbeitbarkeit der Kautschukmischungen trotz hoher Ausgangsviskositäten resultiert. Bei einer strengen Korrelation würde man - wie bei den EPDM-Vergleichsbeispielen - wesentlich höhere Mischungsviskositäten erwarten.

### 2.3: Vulkanisationsverhalten der Kautschukmischungen

Das Vulkanisationsverhalten der Mischungen wurde nach ASTM D 5289 bei 180°C mit Hilfe des Moving Die Rheometers MDR2000 der Firma Alpha Technology untersucht. Auf diese Weise wurden die charakteristische Vulkameterwerte Fₐ, Fₘₐₓ, Fₘₐₓ.-Fₐ, t₁₀, t_{50,} t₉₀ und t₉₅ bestimmt.

| **Kautschukmischung-Nr.:** | | **2.3.1** | **2.3.2** | **2.3.3** | **2.3.4** | **2.3.5** | **2.3.6** | **2.3.7** |
|---|---|---|---|---|---|---|---|---|
| Fₐ | [dNm] | 2,20 | 2,10 | 1,95 | 1,37 | 2,31 | 2,68 | 1,03 |
| Fₘₐₓ | [dNm] | 9,56 | 8,08 | 10,50 | 7,95 | 11,47 | 12,41 | 5,83 |
| Fₘₐₓ- Fₐ | [dNm] | 7,36 | 5,98 | 8,55 | 6,58 | 9,16 | 9.73 | 4,80 |
| t₁₀ | [min] | 0,50 | 0,48 | 0,44 | 0,54 | 0,48 | 0,47 | 0,59 |
| t₅₀ | [min] | 1,29 | 1,26 | 1,14 | 1,36 | 1,22 | 1,16 | 1,50 |
| t₉₀ | [min] | 3,21 | 2,90 | 2,67 | 3,00 | 2,80 | 2,67 | 3,30 |
| t₉₅ | [min] | 4,12 | 3,54 | 3,26 | 3,73 | 3,49 | 3,32 | 4,07 |

### Nach DIN 53 529, Teil 3 bedeuten:

| | |
|---|---|
| Fₐ: | Vulkameteranzeige im Minimum der Vernetzungsisotherme |
| Fₘₐₓ: | Maximum der Vulkameteranzeige |
| Fₘₐₓ - Fₐ: | Differenz der Vulkameteranzeigen zwischen Maximum und Minimum |
| t₁₀: | Zeitpunkt, bei dem 10% des Endumsatzes erreicht sind |
| t₅₀: | Zeitpunkt, bei dem 50% des Endumsatzes erreicht sind |
| t₉₀: | Zeitpunkt, bei dem 90% des Endumsatzes erreicht sind |
| t₉₅: | Zeitpunkt, bei dem 95% des Endumsatzes erreicht sind |

Die Mischungen wurden in einer Plattenpresse unter einem Druck von 170 bar bei 180°C gemäß den in der Tabelle angegebenen t₉₅-Zeiten vulkanisiert.

### 2.4: Vulkanisateigenschaften der Kautschukmischungen

An den ungealterten Vulkanisaten wurden folgende Prüfwerte bei 23°C bzw. 70°C bestimmt.

| **Kautschukmischung-Nr.:** | | **2.4.1** | **2.4.2** | **2.4.3** | **2.4.4** | **2.4.5** | **2.4.6** | **2.4.7** |
|---|---|---|---|---|---|---|---|---|
| Shore A Härte bei 23°C / DIN 53505 | [ShA] | 53 | 52 | 56 | 55 | 59 | 60 | 52 |
| Shore A Härte bei 70°C / DIN 53505 | [ShA] | 49 | 48 | 51 | 47 | 53- | 54 | 42 |
| Rückprallelastizität bei 23°C nach DIN 53512 | [%] | 30,0 | 30,0 | 28,8 | 31,2 | 32,7 | 35,0 | 28,0 |
| Rückprallelastizität bei 70°C nach DIN 53512 | [%] | 34,7 | 35,0 | 38,3 | 31,5 | 36,2 | 39,5 | 25 |
| Spannungswert bei 25% Dehnung (α₂₅) 23°C /DIN 53504 | [MPa] | 0,56 | 0,55 | 0,61 | 0,66 | 0,77 | 0,79 | 0,53 |
| Spannungswert bei 100% Dehnung (α₁₀₀) 23°C / DIN 53504 | [MPa] | 1,3 | 1,4 | 1,8 | 1,4 | 1,9 | 1,9 | 1,2 |
| Spannungswert bei 300% Dehnung (σ₃₀₀) 23°C / DIN 53504 | [MPa] | 3,9 | 4,5 | 5,5 | 3,7 | 5,0 | 5,7 | 2,5 |
| Zugfestigkeit (σₘₐₓ.) 23°C / DIN 53504 | [MPa] | 5,7 | 6,3 | 6,7 | 4,6 | 6,3 | 7,2 | 2,9 |
| Bruchdehnung (ε_{b}) 23°C / DIN 53504 | [%] | 543 | 470 | 406 | 413 | 387 | 409 | 426 |
| Zugfestigkeit (σ_{max.}) x Bruchdehnung (ε_{b}) 23°C | [MPa] [%] | 3095 | 2961 | 2720 | 1900 | 2438 | 2944 | 1235 |

An den gealterten Vulkanisaten (14 Tage in Heißluft bei 125°C) wurden folgende Prüfwerte bei 23°C bestimmt.

| **Kautschukmischung-Nr.:** | | **2.4.1** | **2.4.2** | **2.4.3** | **2.4.4** | **2.4.5** | **2.4.6** | **2.4.7** |
|---|---|---|---|---|---|---|---|---|
| Shore A Härte bei 23°C / DIN 53505 | [ShA] | 56 | 56 | 54 | 60 | 65 | 66 | 59 |
| *Änderung gegenüber Ausgangswert* | [ShA] | +3 | +4 | -2 | +5 | +6 | +6 | +7 |
| Spannungswert bei 25% Dehnung (σ₂₅) 23°C /DIN 53504 | [MPa] | 0,67 | 0,68 | 0,63 | 0,85 | 1,02 | 1,00 | 0,81 |
| *Änderung gegenüber Ausgangswert* | Δ[%] | +20 | +24 | +3 | +29 | +32 | +27 | +53 |
| Spannungswert bei 100% Dehnung (σ₁₀₀) 23°C / DIN 53504 | [MPa] | 1,5 | 1,5 | 1,5 | 1,6 | 2,3 | 2,3 | 1,4 |
| *Änderung gegenüber Ausgangswert* | Δ[%] | +15 | +7 | -17 | +14 | +21 | +21 | +17 |
| Spannungswert bei 300% Dehnung (σ₃₀₀) 23°C / DIN 53504 | [MPa] | 3,0 | 3,6 | 3,4 | 3,4 | 4,9 | '5,4 | 2,5 |
| *Änderung gegenüber Ausgangswert* | Δ[%] | -23 | -20 | -38 | -8 | -2 | -5 | 0 |
| Zugfestigkeit (σ_{max.}) 23°C / DIN 53504 | [MPa] | 4,1 | 4,6 | 3,8 | 3,9 | 5,7 | 6,5 | 2,7 |
| *Änderung gegenüber Ausgangswert* | Δ[%] | -28 | -27 | -43 | -15 | -9 | -10 | -7 |
| Bruchdehnung (ε_{b}) 23°C | [%] | 598 | 480 | 377 | 432 | 372 | 404 | 406 |
| *Ändenrung gegenüber Ausgangswert* | Δ[%] | +10 | +2 | -7 | +5 | -4 | -1 | -5 |

Zur Demonstration des erfindungsgemäßen Effektes wird das Produkt aus Zugfestigkeit (σ_{max.}) und Bruchdehnung (ε_{b}) 23°C der ungealterten Vulkanisate in Relation zur Mooney-Viskosität der zugehörigen Kautschukmischungen aus Tab. 1.1. grafisch dargestellt.

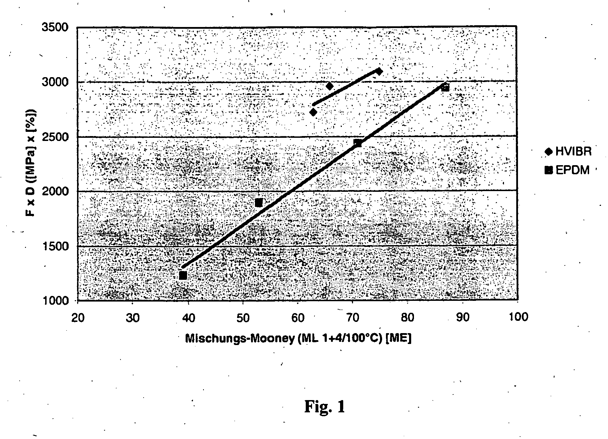

- **Fig. 1.:**: Produkt aus Zugfestigkeit (σ_{max.}) und Bruchdehnung (ε_{b}) 23°C der ungealterten Vulkanisate (F x D), aufgetragen gegen die Mooney-Viskosität der zugehörigen Kautschukmischungen aus Tab. 1.1.

Aus der Auftragung ist ersichtlich, dass die erfindungsgemäßen Beispiele auf Basis von hydriertem Vinylpolybutadien bei gleichen Mooneyviskositäten ein höheres Niveau der mechanischen Eigenschaften aufweisen, als die EPDM-Vergleichsbeispiele.

## Patentansprüche

1. Hochgefüllte Kautschukmischungen auf Basis hydrierter Vinylpolybutadiene mit Vinylgehalten von 45 bis 55 Mol-%, Hydriergraden von 80 bis 100 % und Mooneyviskositäten (ML 1+4/125°C) von 60 bis 150 ME, **dadurch gekennzeichnet, dass** die Kautschukmischungen Füllstoffe in Mengen von 151 bis 350 phr enthalten.

2. Hochgefüllte Kautschukmischungen nach Anspruch 1, **dadurch gekennzeichnet, dass** als Füllstoffe Ruß, Kieselsäure, Calciumcarbonat, Magnesiumcarbonat, Bariumcarbonat, Zinkoxid, Magnesiumoxid, Calciumoxid, Aluminiumoxid, Eisenoxid, Diatomenerde, Korkmehl, Silikate, Aluminiumhydroxid, Magnesiumhydroxid oder Kalziumhydroxid oder deren Mischungen untereinander eingesetzt werden.

3. Hochgefüllte Kautschukmischungen nach Anspruch 1 und 2, **dadurch gekennzeichnet, dass** die Kautschukmischungen neben den Füllstoffen noch Weichmacher (Öle) in Mengen von 0,1 bis 150 phr, bezogen auf die Gesamtmenge an Kautschuk, enthalten.

4. Hochgefüllte Kautschukvulkanisate nach Ansprüchen 1 bis 3, **dadurch gekennzeichnet, dass** die Vulkanisate durch Vulkanisation der Kautschukmischungen in Gegenwart von Schwefel oder Schwefelspendern oder deren Gemischen (Schwefelvulkanisation) oder durch Vulkanisation in Gegenwart von Peroxyden (peroxydische Vulkanisation) oder in Gegenwart von Azoverbindungen hergestellt wurden.

5. Verwendung der hochgefüllten Kautschukvulkanisate nach Ansprüchen 1 bis 4 zur Herstellung von technischen Gummiartikeln.

6. Verwendung der hochgefüllten Kautschukvulkanisate nach Anspruch 5 zur Herstellung von Profilen, Schläuchen, Kabelumantelungen, Kupplungen, Dichtungen, Manschetten, Beschichtungen, Platten, Belägen sowie von Verbundkörpern aus Gummi/Metallen, Gummi/Kunststoffen und Gummi/Textilien.

## Claims

1. Highly filled rubber mixtures based on hydrogenated vinylpolybutadienes with vinyl contents of from 45 to 55 mol%, degrees of hydrogenation of from 80 to 100% and Mooney viscosities (ML 1+4/125°C) of from 60 to 150 MU, **characterized in that** the rubber mixtures comprise amounts of from 151 to 350 phr of fillers.

2. Highly filled rubber mixtures according to Claim 1, **characterized in that** the fillers used comprise carbon black, silica, calcium carbonate, magnesium carbonate, barium carbonate, zinc oxide, magnesium oxide, calcium oxide, aluminium oxide, iron oxide, diatomaceous earth, cork flour, silicates, aluminium hydroxide, magnesium hydroxide or calcium hydroxide or a mixture of these.

3. Highly filled rubber mixtures according to Claim 1 and 2, **characterized in that** the rubber mixtures comprise not only the fillers but also plasticizers (oils) in amounts of from 0.1 to 150 phr, based on the total amount of rubber.

4. Highly filled rubber vulcanizates according to Claims 1 to 3, **characterized in that** the vulcanizates were produced by vulcanization of the rubber mixtures in the presence of sulphur or sulphur donors or a mixtures of these (sulphur vulcanization) or by vulcanization in the presence of peroxides (peroxidic vulcanization) or in the presence of azo compounds.

5. Use of the highly filled rubber vulcanizates according to Claims 1 to 4 for the production of technical rubber items.

6. Use of the highly filled rubber vulcanizates according to Claim 5 for the production of profiles, hoses, cable sheathing, couplings, gaskets, sleeves, coatings, sheets, coverings, or else of composite products composed of rubber/metals, rubber/plastics and rubber/textiles.

## Revendications

1. Mélanges de caoutchoucs hautement chargés à base de vinylpolybutadiènes hydrogénés présentant des teneurs en vinyle de 45 à 55% en mole, des degrés d'hydrogénation de 80 à 100% et des viscosités de Mooney (ML 1 + 4/125°C) de 60 à 150 ME, **caractérisés en ce que** les mélanges de caoutchoucs contiennent des charges en des quantités de 151 à 350 parties par cent parties.

2. Mélanges de caoutchouc hautement chargés selon la revendication 1, **caractérisés en ce qu'**on utilise comme charges la suie, la silice, le carbonate de calcium, le carbonate de magnésium, le carbonate de baryum, l'oxyde de zinc, l'oxyde de magnésium, l'oxyde de calcium, l'oxyde d'aluminium, l'oxyde de fer, les terres de diatomées, la farine de liège, les silicates, l'hydroxyde d'aluminium, l'hydroxyde de magnésium ou l'hydroxyde de calcium ou leurs mélanges les uns avec les autres.

3. Mélanges de caoutchouc hautement chargés selon la revendication 1 et 2, **caractérisés en ce que** les mélanges de caoutchoucs contiennent, outre les charges, encore des plastifiants (huiles) en des quantités de 0,1 à 150 parties par cent parties, par rapport à la quantité totale de caoutchouc.

4. Produits de vulcanisation de caoutchouc hautement chargés selon les revendications 1 à 3, **caractérisés en ce que** les produits de vulcanisation sont préparés par vulcanisation des mélanges de caoutchoucs en présence de soufre ou d'agents de distribution de soufre ou leurs mélanges (vulcanisation au soufre) ou par vulcanisation en présence de peroxydes (vulcanisation au peroxyde) ou en présence de composés azo.

5. Utilisation des produits de vulcanisation de caoutchouc hautement chargés selon les revendications 1 à 4 pour la préparation d'objets industriels en caoutchouc.

6. Utilisation des produits de vulcanisation de caoutchouc hautement chargés selon la revendication 5 pour la préparation de profilés, de flexibles, de gaines de câbles, d'entraînements, de joints, de manchettes, de revêtements, de plaques, de recouvrements ainsi que de corps composites en caoutchouc/métaux, caoutchouc/matériaux synthétiques et caoutchouc/textiles.
